# EUROPEAN PATENT SPECIFICATION

(11) **EP 3 881 569 B1**
(45) Date of publication and mention of the grant of the patent: **04.06.2025**
(21) Application number: 19801998.6
(22) Date of filing: 21.10.2019
(51) Int. Cl.: H04W 4/021, G07C 9/00

(54) **ACCESS CONTROL SYSTEM BASED ON POSITIONING**
ZUGANGSKONTROLLSYSTEM AUF DER GRUNDLAGE VON POSITIONIERUNG
SYSTÈME DE CONTRÔLE D'ACCÈS BASÉ SUR UN SYSTÈME DE POSITIONNEMENT

(30) Priority: 13.11.2018 IN 201811042570
(43) Date of publication of application: 22.09.2021
(73) Proprietor: Honeywell International Inc., Charlotte, NC 28202 (US)
(72) Inventor: ELINDRA, Kameswari, Hyderabad, Telangana 500081 (IN); NANDA, Bhabani Sankar, Hyderabad, Telangana 500081 (IN); CHAPPA, Nagavendra, Hyderabad, Telangana 500081 (IN); KHAN, Hassan Mohammed, Hyderabad, Telangana 500081 (IN)
(74) Representative: Dehns
(86) International application number: PCT/US2019/057146
(87) International publication number: WO 2020/101837

(56) References cited:
- WO-A1-2017/180388
- WO-A1-2017/183044
- US-B2- 9 803 391

## Description

The subject matter disclosed herein generally relates to the field of access control systems, and more particularly to A method of operating an access control system. The example embodiments include an apparatus and method for communication between access controls of access control systems.

Access controls may be utilized to control access to specific entry point, such as, for example a lock on a door. While mobile devices may be utilized to actuate access controls (i.e., locks) that control access to rooms, actuation is not automated and visually impaired individuals may have difficulty finding the access control and navigating through a building with multiple control access controls. WO 2017/180388 discloses a method of advertisement filtering including receiving advertisements from a multiple of access controls; filtering the received advertisements based on a credential on the mobile device; comparing the filtered received advertisements and determining a user intent to access a particular access control in response to the comparing and to a destination intent.

According to a first aspect, the invention provides a method of operating an access control system. The method includes: determining that the individual may be intending to actuate an access control; transmitting an entrance inquiry notification to the individual; receiving an entrance inquiry response from the individual; determining an entrance inquiry response intent in response to the entrance inquiry response; receiving an access request from a mobile device being carried by the individual in response to the entrance inquiry response intent, the access request including a digital credential; and actuating the access control in response to access request if the digital credential is authorised to actuate the access control. Determining that the individual may be intending to actuate an access control further includes: detecting a location of the mobile device being carried by the individual; and determining that the location of the mobile device is located proximate the access control. Transmitting an entrance inquiry notification to the individual further includes: generating audio sound waves, wherein the entrance inquiry notification is transmitted to the individual via the audio sound waves. Receiving an entrance inquiry response from the individual further includes: receiving audio sound waves, wherein the entrance inquiry notification response is received via the audio sound waves.

Optionally, a speaker on the mobile device generates the audio sound waves.

Optionally, a speaker on the access control generates the audio sound waves.

Optionally, a microphone on the mobile device receives the audio sound waves.

Optionally, a microphone on the access control receives the audio sound waves.

Optionally, the access control is a door lock.

The method may include: actuating a servo to open a door to a room, the door being operably connected to the access control.

According to another aspect, an access control system is provided for carrying out the method of the first aspect. The access control system includes: a processor; and a memory including computer-executable instructions that, when executed by the processor, cause the processor to perform operations, the operations including a method as discussed above.

Determining that the individual may be intending to actuate an access control further includes: detecting a location of the mobile device being carried by the individual; and determining that the location of the mobile device is located proximate the access control.

Transmitting an entrance inquiry notification to the individual further includes: generating audio sound waves, wherein the entrance inquiry notification is transmitted to the individual via the audio sound waves.

Optionally, a speaker on the mobile device generates the audio sound waves.

Optionally, a speaker on the access control generates the audio sound waves.

Receiving an entrance inquiry response from the individual further includes: receiving audio sound waves, wherein the entrance inquiry notification response is received via the audio sound waves.

Optionally, a microphone on the mobile device receives the audio sound waves.

Optionally, a microphone on the access control receives the audio sound waves.

Optionally, the access control is a door lock, and the operations further include: actuating a servo to open a door to a room, the door being operably connected to the access control.

According to another aspect, a computer program product tangibly embodied on a computer readable medium is provided for carrying out the method of the first aspect. The computer program product including instructions that, when executed by a processor, cause the processor to perform operations including a method as discussed above..

Technical effects of embodiments of the present disclosure include detecting when an individual intends to actuate an access control, transmitting an audible command to the individual asking whether the individual would like to actuate the access control, and receiving an audible command from the individual indicating whether the individual would like to actuate the access control.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 illustrates a general schematic system diagram of an access control system;
FIG. 2 illustrates a block diagram of an access control, mobile device and server of the access control system of FIG. 1; and
FIG. 3 is a flow diagram illustrating a method of operating the access control system of FIG. 1.

A detailed description of one or more embodiments of the disclosed apparatus and method are presented herein by way of exemplification and not limitation with reference to the Figures.

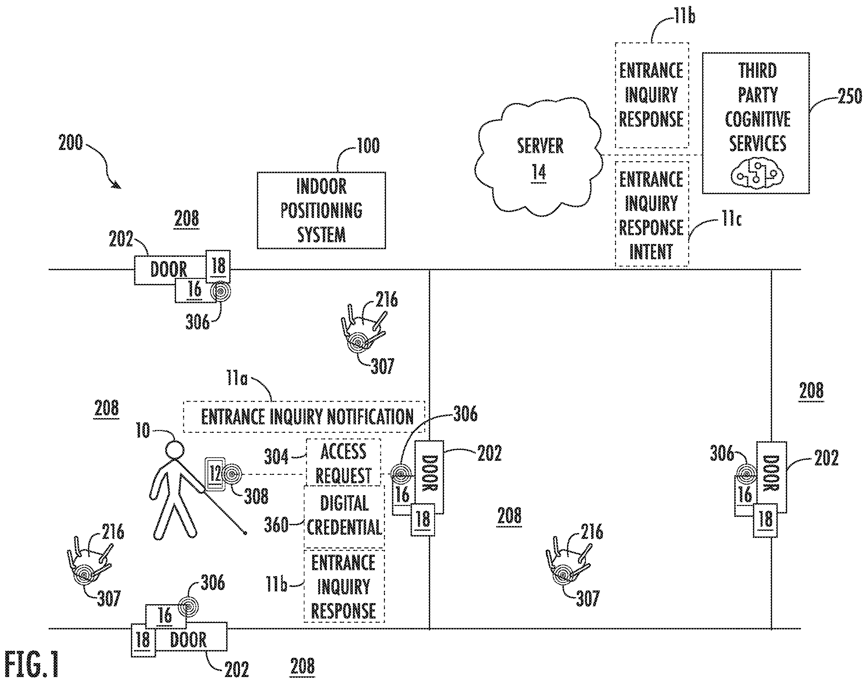

Referring now to FIG. 1, an access control system 200 within building is illustrated, in accordance with an embodiment of the present disclosure. The access control system may include one or more access controls 16 that control access to a room 208 (e.g., hallway or other area) through an impediment, such as, for example a door 202. The access control system 200 may include any number of access controls 16. It is understood that embodiments disclosed herein are not limited to doors 202 and may be applicable to other impediments, such as, for example a turnstile, elevator car, escalator, etc. A digital credential 360 may be utilized to actuate an access control 16 and gain access to a room 208. The access control 16 may be a door lock that controls access to a hotel room 208. The access control 16 may be in operable communication with a servo 18 that physically opens the door 202. The access control 16 may actuate the servo 18 in response to the digital credential 360. The system 200 generally includes a mobile device 12, a server 14, a wireless access protocol device 216, and an access control 16. It should be appreciated that, although particular systems are separately defined in the schematic block diagrams, each or any of the systems may be otherwise combined or separated via hardware and/or software. In the illustrated embodiment, the access controls 16 may control access through a door 202 to a room 208. The access control system 200 may include any number of doors 202 and rooms 208. Further, there may be multiple doors 202 and access controls 16 for each room 208.

A mobile device 12 belonging to an individual 10 may be granted access to one or more access controls 16 (e.g. the door lock on an office or hotel room assigned to the individual) via the digital credential 360. There may be one or more mobile devices 12 assigned to a room 208 (e.g. a husband and a wife in a hotel; or multiple workers in a collaborative workspace). An individual 10 may utilize their mobile device 12 to unlock and/or lock the access control 16 operably connected to their assigned room 208 through an access request 304, which may include the digital credential 360. The mobile device 12 stores the digital credential 360 to unlock and/or lock the access control 16. The digital credential 360 may be used for multiple access controls 16 if there are multiple access controls 16 for a single assigned room 208 or the individual is assigned access to multiple rooms 208. For example, an access control 16 operably connected to an individual's hotel room 208 and an access control 16 operably connected to a hotel pool may respond to the same the digital credential 360. Other digital credentials 360 may be specific to a single access control 16.

Wireless communication may occur between the access control 16 and the mobile device 12 via short range wireless communication, such as for example Wi-Fi, Bluetooth, ZigBee, infrared, or any other short-range wireless communication method known to one of skill in the art. In an embodiment, the short-range wireless communication is Bluetooth. The mobile device 12 may have to be within a selected range of the access control 16 in order to utilize short-range wireless communication. For example, the selected range may be manually set by an individual as a chosen range or automatically set based on the limitations of hardware associated with the mobile device 12 and/or the access control 16.

Each access control 16 is a wireless-capable, restricted-access, or restricted-use device such as wireless locks, access control readers for building entry, and other restricted-use machines. The mobile device 12 submits the digital credential 360 to the access controls 16, thereby selectively permitting a user to actuate (i.e., access or activate) functions of the access controls 16. A user may, for example, submit a digital credential 360 to an electromechanical lock to unlock it, and thereby gain access to a room 208.

The mobile device 12 may transmit an access request 304 including the digital credential 360 to the access control 16 by short-range radio transmission when the mobile device 12 is placed proximate the access control 16. The mobile device 12 is a wireless capable handheld device such as a smartphone that is operable to communicate with the server 14 and the access controls 16. The server 14 may provide data 320 including digital credentials 360 and other data to the access control 16, such as firmware or software updates to be communicated to one or more of the access controls 16. Although the server 14 is depicted herein as a single device, it should be appreciated that the server 14 may alternatively be embodied as a multiplicity of systems, from which the access controls 16 receives digital credential 360 and other data.

The server 14 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

In order to determine a current location of the mobile device 12, an indoor positioning system 100 may collect and analyze positional data. The indoor positioning system 100 may include the access controls 16 and the wireless access control devices 216. In one embodiment, the indoor positioning system 100 is a separate electronic controller in electronic communication with the access controls 16 and the wireless access protocol devices 216. The indoor positioning system 100 may also be in communication with the mobile device12. In the embodiment where the indoor positioning system 100 is an electronic controller, the indoor positioning system 100 may include a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. In another embodiment, the indoor positioning system 100 may be software located on at least one of the access controls 16, the wireless access protocol devices 216, and the server 14.

The access control 16 may be configured to continuously advertise a wireless signal 306 to the mobile device 12. The advertisement is the access control 16 declaring its presence to any nearby listening device and if it is a connectable advertisement it is an opportunity for another device (i.e., nearby mobile device 12) to connect to the access control 16. For example, the wireless signal 306 of the access control 16 may be a Bluetooth signal. The mobile device 12 is configured to detect the wireless signal 306 and determine positional data of the mobile device 12 in response to a signal strength of the wireless signal 306. The positional data of the mobile device 12 may help determine which access control 16 is located proximate the mobile device 12, and thus which access control 16 the mobile device 12 desires to enter.

Positional data of the mobile device 12 may also be determined using the wireless access protocol device 216. The wireless access protocol device 216 may be configured to advertise a wireless signal 307. The advertisement is the wireless access protocol device 216 declaring its presence to any nearby listening device and if it is a connectable advertisement it is an opportunity for another device (i.e., nearby mobile device 12) to connect to the wireless access protocol device 216. For example, the wireless signal 307 of the wireless access protocol device 216 may be a Wi-Fi signal. The mobile device 12 is configured to detect the wireless signal 307 and determine a positional data of the mobile device 12 in response to a signal strength of the wireless signal 307.

Positional data of the mobile device 12 may also be determined using the wireless access protocol device 216 and/or the access controls 16 to detect a wireless signal 308 advertised by the mobile device 12. The mobile device 12 may be configured to advertise a wireless signal 308. The advertisement is the mobile device 12 declaring its presence to any nearby listening device and if it is a connectable advertisement it is an opportunity for another device (i.e., access control 16 or wireless access protocol device 216) to detect this advertisement and triangulate the location of the mobile device 12. The wireless access protocol device 216 and/or the access controls 16 are configured to detect the wireless signal 308 and determine a positional data of the mobile device 12 in response to a signal strength of the wireless signal 308.

Wireless signal interaction data between the mobile device 12 and at least one of the access device 16 and the wireless access protocol device 216 may be transmitted to the indoor positioning system 100 to determine positional data and a current location of the mobile device 12. The indoor positioning system 100 may use signal strength detected between the mobile device 12, access controls 16, and the wireless access protocol device 216 to determine positional data of the mobile device 12.

As an individual 10 carrying a mobile device 12 approaches an access control 16, the current location of the mobile device 12 may be tracked to determine when the individual 12 has the intent to enter the access control 16. Intent may be determined by the proximity of the individual 10 to an access control 16, a predicted schedule of the individual 10, past usage of the access control 16 by the individual 10, a direction of travel of the individual 16, an electronic schedule of the individual 10, etc. If the individual 10 has a dedicated office or is a host of a conference room, then the individual 10 can open the door 202 without proximity and/or past schedule once the mobile device 12 has detected the access control 16. Once the individual 10 is determined to intend to enter a specific access control 16, an entrance inquiry notification 11a may be transmitted to the individual 10 inquiring whether the individual 10 desires to enter the access control 16. The entrance inquiry notification 11a may be audible, visual, tactile, or vibratory. The entrance inquire notification 11a may be transmitted to the individual 10 by the mobile device 12 and/or a separate device located proximate the door 202 of the access control 16, such as, for example, the access control 16. The entrance inquire notification 11a may be transmitted by an audio speaker 58 of the mobile device 12 and/or an audio speaker 31 of the access control 16. For example, the entrance inquire notification 11a may be an audible alert from the mobile device 12 stating "Do you desire to enter Door A?" Advantageously, utilizing an audible alert from the mobile device 12 may help visually impaired individuals navigate through an access control system 200.

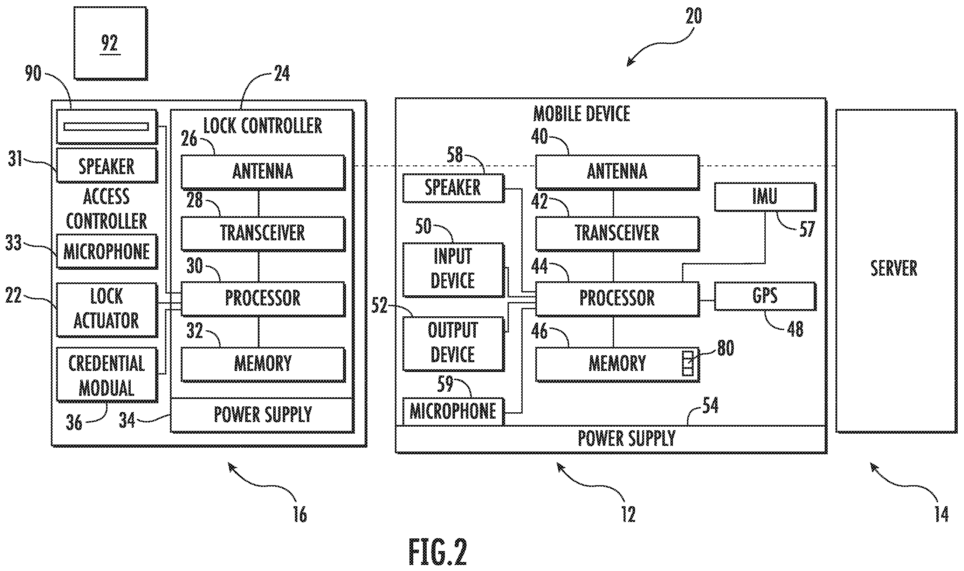

Following the entrance inquiry notification 11a, the individual 10 may provide an entrance inquiry response 11b that may be verbally provided or entered into the user interface (e.g., input device 50 see FIG. 2) of the mobile device 12. If the entrance inquiry response 11b is provided verbally, the entrance inquiry response 11b may be detected/received by a microphone 59 of the mobile device 12 or a microphone 33 in the access control 16. If the entrance inquiry response 11b is verbal then the access control 16 and/or mobile device 16 may transmit the entrance inquiry response 11b to a third party cognitive service 250 for speech analysis to determine the entrance inquiry response intent 11c of the entrance inquiry response 11b. The third party cognitive service 250 may be located on the mobile device 12 and/or in electronic communication with the mobile device 12 (i.e., a web based service). The entrance inquiry response intent 11c of the entrance inquiry response 11b may indicate whether or not the individual 10 would like to actuate the access control 16. Once the entrance inquiry response intent 11c is determined then the entrance inquiry response intent 11c is transmitted back to the access control 16 through the server 14. If the entrance inquiry response intent 11c indicates that the individual 10 wants to actuate the access control 16 then the mobile device 12 transmits an access request 304 to the access control 16 including the digital credential 360. The digital credential 360 may be utilized to unlock an access control and allow access to a room 208, discussed further below. The access control 16 will be actuated if the digital credential 360 is authorized to actuate the access control 16. For example, the individual 10 may be authorized to access some rooms 308 but not others. Once the access control 16 is unlocked, the individual 10 may enter through the door 202. Additionally, the servo 18 may physically open the door 202 for the individual 10 when the access control 16 is unlocked.

Referring now to FIG. 2, with continued reference to FIG. 1, a block diagram of an example electronic lock system 20 including the access control 16, the mobile device 12, and the server 14 is illustrated, in accordance with an embodiment of the present disclosure. The access control 16 generally includes a lock actuator 22, a lock controller 24, a lock antenna 26, a lock transceiver 28, a lock processor 30, a lock memory 32, a lock power supply 34, a lock card reader 90, a credential module 36, a microphone 33, and a speaker 31.

The access control 16 may have essentially two readers, one reader 90 to read a physical key card 92 and the credential module 36 to communicate with the mobile device 12 via the lock processor 30 and the transceiver 28 and antenna 26. In addition to utilizing the mobile device 12 to actuate the access control 16, a physical key card 92 may also be used to actuate the access control 16 by being inserted into the access control 16 for the access control 16 to read the physical key card 92 (e.g. a magnetic strip on an encoded card 92). The physical key card 92 is capable of being encoded with card data, such as, for example, a magnetic strip or RFID chip. The card data may include credentials similar to the digital credential 360 to grant access to a specific access control 16. For example, for a period the mobile device 12 may be granted access to a specific access control 16, such as, for example, a period of stay/employment for the individual possessing the mobile device 12.

The access control 16 is responsive to the digital credential 360 from the mobile device 12, and may, for example, be the lock of a door lock. Upon receiving and authenticating an appropriate digital credential 360 from the mobile device 12 using the credential module 36, or after receiving card data from lock card reader 90, the lock controller 24 commands the lock actuator 22 to lock or unlock a mechanical or electronic lock. The lock controller 24 and the lock actuator 22 may be parts of a single electronic or electromechanical lock unit, or may be components sold or installed separately. In an embodiment, the access control 16 is composed of separate components - a reader (e.g., transceiver 28 and/or antenna 26) at a door 202, a processor 30 that gets the digital credential 360 from the reader, and then a lock actuator 22 that gets a signal from the processor 30 to actuate an electromechanical lock.

The lock transceiver 28 is capable of transmitting and receiving data to and from at least one of the mobile device 12, the wireless access protocol device 216, and the other access controls 16. The lock transceiver 28 may, for instance, be a near field communication (NFC), Bluetooth, infrared, ZigBee, or Wi-Fi transceiver, or another appropriate wireless transceiver. The lock antenna 26 is any antenna appropriate to the lock transceiver 28. The lock processor 30 and lock memory 32 are, respectively, data processing, and storage devices. The lock processor 30 may, for instance, be a microprocessor that can process instructions to the validate digital credential 360 and determine the access rights contained in the digital credential 360 or to pass messages from the transceiver 28 to the credential module 36 and to receive a response indication back from the credential module 36. The lock memory 32 may be RAM, EEPROM, or other storage medium where the lock processor 30 can read and write data including but not limited to lock configuration options. The lock power supply 34 is a power source such as line power connection, a power scavenging system, or a battery that powers the lock controller 24. In other embodiments, the lock power supply 34 may only power the lock controller 24, with the lock actuator 22 powered primarily or entirely by another source, such as user work (e.g. turning a bolt).

While FIG. 2 shows the lock antenna 26 and the transceiver 28 connected to the processor 30, this is not to limit other embodiments that may have additional antenna 26 and transceiver 28 connected to the credential module 36 directly. The credential module 36 may contain a transceiver 28 and antenna 26 as part of the credential module 36. Or the credential module 36 may have a transceiver 28 and antenna 26 separately from the processor 30 which also has a separate transceiver 28 and antenna 26 of the same type or different. In some embodiments, the processor 30 may route communication received via transceiver 28 to the credential module 36. In other embodiments the credential module 36 may communicate directly to the mobile device 12 through the transceiver 28. The speaker 31 is configured to generate audio sound waves (i.e., audible sound). The microphone 33 is configured to detect audio sound waves (i.e., audible sound).

The mobile device 12 generally includes a key antenna 40, a key transceiver 42, a key processor 44, a key memory 46, a GPS receiver 48, an input device 50, an output device 52, a key power supply 54, an inertial measurement unit (IMU) sensor 57, a speaker 58, and a microphone 59. The key transceiver 42 is a transceiver of a type corresponding to the lock transceiver 28, and the key antenna 40 is a corresponding antenna. In some embodiments, the key transceiver 42 and the key antenna 40 may also be used to communicate with the server 14. In other embodiments, one or more separate transceivers and antennas may be included to communicate with server 14. The key memory 46 is of a type to store a plurality of digital credentials 360 locally on the mobile device 12. The mobile device 12 may also include a mobile device application 80. Embodiments disclosed herein, may operate through the mobile device application 80 installed on the mobile device 12. The IMU sensor 57 may be a sensor such as, for example, an accelerometer, a gyroscope, or a similar sensor known to one of skill in the art. The speaker 58 is configured to generate audio sound waves (i.e., audible sound). The microphone 59 is configured to detect audio sound waves (i.e., audible sound).

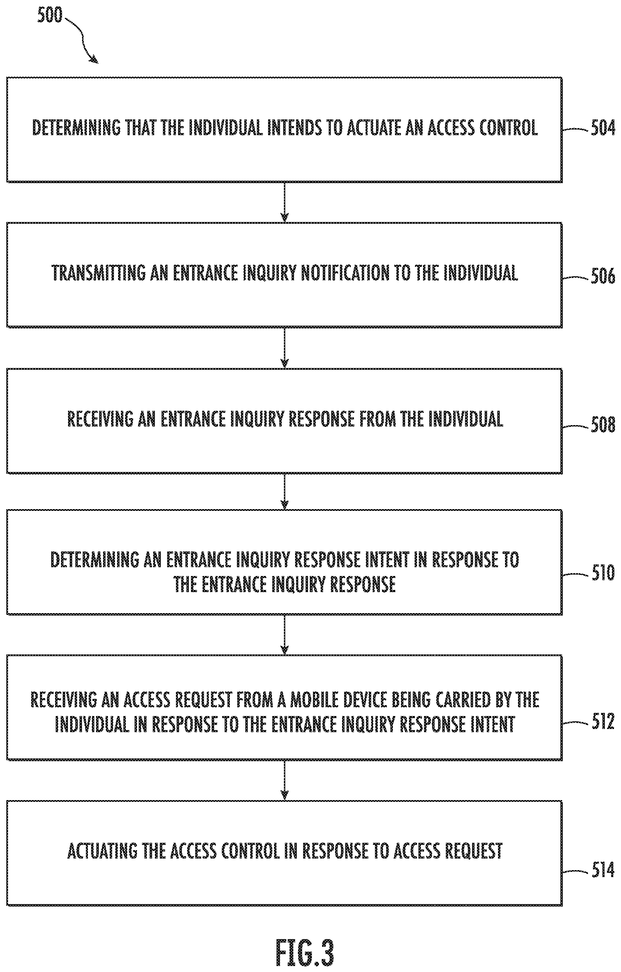

Referring now to FIG. 3, with continued reference to FIGs. 1-2, a flow chart of a method 500 of operating an access control system 200, in accordance with an embodiment of the present disclosure. In an embodiment, the method 500 may be performed by the access control system 200 and/or by the server 14 of the access control system 200.

At block 504, it is determined that the individual 10 intends to actuate an access control 16. It may be determined that the individual 10 intends to actuate an access control 16 by: detecting a location of a mobile device 12 being carried by an individual 10; and determining that the location of the mobile device 12 is located proximate the access control 16 or is enroute to the access control 16.

At block 506, an entrance inquiry notification 11a is transmitted to the individual 10. The entrance inquiry notification 11a may be transmitted to the individual 10 via audio sound waves generated by at least one of the speaker 58 on the mobile device 12 and the speaker 31 on the access control 16. At block 508, an entrance inquiry response 11b is received from the individual 10. The entrance inquiry response 11b may be transmitted by the individual 10 and received by at least one of the microphone 59 on the mobile device 12 and the microphone 33 on the access control 16.

At block 510, an entrance inquiry notification intent 11c is determined in response to the entrance inquiry notification 11b. At block 512, an access request 304 is received from a mobile device 12 being carried by the individual 10 in response to the entrance inquiry notification intent 11c. At block 514, the access control 16 is actuated in response to access request 304. The access control 16 within the method 500 may be a door lock. The method may further comprise: actuating servo 18 to open a door 202 to a room 208, the door 202 being operably connected to the access control 16.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method (500) performed by an access control system, the method comprising:
determining (504) that an individual (10) may be intending to actuate an access control (16);
transmitting (506) an entrance inquiry notification (11a) to the individual (10), wherein transmitting the entrance inquiry notification to the individual further comprises generating audio sound waves, wherein the entrance inquiry notification is transmitted to the individual (10) via the audio sound waves;
receiving (508) an entrance inquiry response (11b) from the individual (10), wherein receiving the entrance inquiry response from the individual further comprises receiving audio sound waves, wherein the entrance inquiry response (11b) is received via the audio sound waves;
determining (510) an entrance inquiry response intent (11c) in response to the entrance inquiry response (11b);
receiving (512) an access request (304) from a mobile device (12) being carried by the individual (10) in response to the entrance inquiry response intent (11c), the entrance inquiry response intent (11c) indicating that the individual wants to actuate the access control, the access request including a digital credential (360); and
actuating (514) the access control (16) in response to the access request (304) if the digital credential (360) is authorised to actuate the access control (16);
wherein determining that the individual (10) may be intending to actuate the access control further comprises:
detecting a location of the mobile device (12) being carried by the individual (10); and
determining that the location of the mobile device (12) is located proximate the access control (16).

2. The method of claim 1, wherein a speaker (58) on the mobile device (12) generates the audio sound waves.

3. The method of claim 1, wherein a speaker (31) on the access control (16) generates the audio sound waves.

4. The method of claim 1, wherein a microphone (59) on the mobile device (12) receives the audio sound waves.

5. The method of claim 1, wherein a microphone (33) on the access control (16) receives the audio sound waves.

6. The method of claim 1, wherein the access control (16) is a door lock.

7. The method of claim 1, further comprising:
actuating a servo to open a door to a room, the door being operably connected to the access control (16).

8. The method of claim 1, determining that the individual (10) may be intending to actuate the access control (16) is further based on at least a predicted schedule of the individual, past usage of the access control by the individual, and/or an electronic schedule of the individual.

9. An access control system, comprising
a processor; and
a memory comprising computer-executable instructions that, when executed by the processor, cause the processor to perform operations, the operations comprising a method as claimed in any preceding claim.

10. A computer program product tangibly embodied on a computer readable medium, the computer program product including instructions that, when executed by a processor, cause the processor to perform operations comprising a method as claimed in any of claims 1 to 8.

## Patentansprüche

1. Verfahren (500), das von einem Zugangskontrollsystem durchgeführt wird, wobei das Verfahren Folgendes umfasst:
Bestimmen (504), dass eine Person (10) möglicherweise beabsichtigt, eine Zugangskontrolle (16) zu betätigen;
Übermitteln (506) einer Eingangsanfrage-Benachrichtigung (11a) an die Person (10), wobei
das Übermitteln der Eingangsanfrage-Benachrichtigung an die Person weiter das Erzeugen von Audio-Schallwellen umfasst, wobei die Eingangsanfrage-Benachrichtigung über die Audio-Schallwellen an die Person (10) übermittelt wird;
Empfangen (508) einer Eingangsanfrage-Antwort (11b) von der Person (10), wobei
das Empfangen der Antwort auf die Eingangsanfrage von der Person weiter das Empfangen von Audio-Schallwellen umfasst, wobei die Antwort auf die Eingangsanfrage (11b) über die Audio-Schallwellen empfangen wird;
Bestimmen (510) einer Eingangsanfrage-Antwortabsicht (11c) als Reaktion auf die Eingangsanfrage-Antwort (11b);
Empfangen (512) einer Zugangsanforderung (304) von einer von der Person (10) getragenen Mobilvorrichtung (12) als Reaktion auf die Eingangsanfrage-Antwortabsicht (11c), wobei die Eingangsanfrage-Antwortabsicht (11c) anzeigt, dass die Person die Zugangskontrolle betätigen möchte,
wobei die Zugangsanforderung einen digitalen Berechtigungsnachweis (360) beinhaltet; und
Betätigen (514) der Zugangskontrolle (16) als Reaktion auf die Zugangsanforderung (304), wenn der digitale Berechtigungsnachweis (360) zur Betätigung der Zugangskontrolle (16) berechtigt ist;
wobei die Bestimmung, dass die Person (10) möglicherweise beabsichtigt, die Zugangskontrolle zu betätigen, weiter Folgendes umfasst:
Erfassen eines Standorts der von der Person (10) getragenen Mobilvorrichtung (12); und
Bestimmen, dass sich der Standort der Mobilvorrichtung (12) in der Nähe der Zugangskontrolle (16) befindet.

2. Verfahren nach Anspruch 1, wobei ein Lautsprecher (58) auf der Mobilvorrichtung (12) die Audio-Schallwellen erzeugt.

3. Verfahren nach Anspruch 1, wobei ein Lautsprecher (31) an der Zugangskontrolle (16) die Audio-Schallwellen erzeugt.

4. Verfahren nach Anspruch 1, wobei ein Mikrofon (59) auf der Mobilvorrichtung (12) die Audio-Schallwellen empfängt.

5. Verfahren nach Anspruch 1, wobei ein Mikrofon (33) an der Zugangskontrolle (16) die Audio-Schallwellen empfängt.

6. Verfahren nach Anspruch 1, wobei es sich bei der Zugangskontrolle (16) um ein Türschloss handelt.

7. Verfahren nach Anspruch 1, weiter umfassend:
Betätigen eines Servomotors, um eine Tür zu einem Raum zu öffnen, wobei die Tür mit der Zugangskontrolle (16) betriebsbereit verbunden ist.

8. Verfahren nach Anspruch 1, wobei die Bestimmung, dass die Person (10) möglicherweise beabsichtigt, die Zugangskontrolle (16) zu betätigen, weiter auf mindestens einem vorhergesagten Zeitplan der Person, einer früheren Verwendung der Zugangskontrolle durch die Person und/oder einem elektronischen Zeitplan der Person basiert.

9. Zugangskontrollsystem, umfassend
einen Prozessor; und
einen Speicher, der computerausführbare Anweisungen umfasst, die, wenn sie von dem Prozessor ausgeführt werden, den Prozessor veranlassen, Vorgänge durchzuführen, wobei die Vorgänge ein Verfahren nach einem der vorstehenden Ansprüche umfassen.

10. Computerprogrammprodukt, das greifbar auf einem computerlesbaren Medium verkörpert ist, wobei das Computerprogrammprodukt Anweisungen beinhaltet, die, wenn sie von einem Prozessor ausgeführt werden, den Prozessor veranlassen, Vorgänge durchzuführen, die ein Verfahren nach einem der Ansprüche 1 bis 8 umfassen.

## Revendications

1. Procédé (500) réalisé par un système de contrôle d'accès, le procédé comprenant :
la détermination (504) du fait qu'un individu (10) peut avoir l'intention d'actionner un contrôle d'accès (16) ;
la transmission (506) d'une notification d'interrogation d'entrée (11a) à l'individu (10), dans lequel
la transmission de la notification d'interrogation d'entrée à l'individu comprend en outre la génération d'ondes sonores audio, dans lequel la notification d'interrogation d'entrée est transmise à l'individu (10) via les ondes sonores audio ;
la réception (508) d'une réponse à l'interrogation d'entrée (11b) de l'individu (10), dans lequel
la réception de la réponse à l'interrogation d'entrée de l'individu comprend en outre la réception d'ondes sonores audio, dans lequel la réponse à l'interrogation d'entrée (11b) est reçue via les ondes sonores audio ;
la détermination (510) d'une intention de réponse à l'interrogation d'entrée (11c) en réponse à la réponse à l'interrogation d'entrée (11b) ;
la réception (512) d'une demande d'accès (304) depuis un dispositif mobile (12) porté par l'individu (10) en réponse à l'intention de réponse à l'interrogation d'entrée (11c), l'intention de réponse à l'interrogation d'entrée (11c) indiquant que l'individu souhaite actionner le contrôle d'accès,
la demande d'accès incluant un justificatif d'identité numérique (360) ; et
l'actionnement (514) du contrôle d'accès (16) en réponse à la demande d'accès (304) si le justificatif d'identité numérique (360) est autorisé à actionner le contrôle d'accès (16) ;
dans lequel la détermination du fait que l'individu (10) peut avoir l'intention d'actionner le contrôle d'accès comprend en outre :
la détection d'un emplacement du dispositif mobile (12) porté par l'individu (10) ; et
la détermination du fait que l'emplacement du dispositif mobile (12) est situé à proximité du contrôle d'accès (16).

2. Procédé selon la revendication 1, dans lequel un haut-parleur (58) sur le dispositif mobile (12) génère les ondes sonores audio.

3. Procédé selon la revendication 1, dans lequel un haut-parleur (31) sur le contrôle d'accès (16) génère les ondes sonores audio.

4. Procédé selon la revendication 1, dans lequel un microphone (59) sur le dispositif mobile (12) reçoit les ondes sonores audio.

5. Procédé selon la revendication 1, dans lequel un microphone (33) sur le contrôle d'accès (16) reçoit les ondes sonores audio.

6. Procédé selon la revendication 1, dans lequel le contrôle d'accès (16) est une serrure de porte.

7. Procédé selon la revendication 1, comprenant en outre :
l'actionnement d'un servo pour ouvrir une porte d'une pièce, la porte étant reliée de manière opérationnelle au contrôle d'accès (16).

8. Procédé selon la revendication 1, dans lequel la détermination du fait que l'individu (10) peut avoir l'intention d'actionner le contrôle d'accès (16) est en outre basée sur au moins un emploi du temps prédit de l'individu, l'utilisation passée du contrôle d'accès par l'individu, et/ou un emploi du temps électronique de l'individu.

9. Système de contrôle d'accès, comprenant
un processeur ; et
une mémoire comprenant des instructions exécutables par ordinateur qui, lorsqu'elles sont exécutées par le processeur, amènent le processeur à réaliser des opérations, les opérations comprenant un procédé selon une quelconque revendication précédente.

10. Produit de programme informatique incorporé de manière tangible sur un support lisible par ordinateur, le produit de programme informatique incluant des instructions qui, lorsqu'elles sont exécutées par un processeur, amènent le processeur à réaliser des opérations comprenant un procédé selon l'une quelconque des revendications 1 à 8.
